# EUROPEAN PATENT SPECIFICATION

(11) **EP 4 559 959 B1**
(45) Date of publication and mention of the grant of the patent: **02.09.2026**
(21) Application number: 25169354.5
(22) Date of filing: 25.06.2021
(51) Int. Cl.: B32B 27/00, B32B 7/12, C09J 7/30, C09J 11/04, B29C 65/04, B29C 65/32, C09J 7/35, C09J 151/06, B29C 65/36, C09J 9/00, C09J 201/10, C08K 3/013, C08K 3/14, C08K 3/22

(54) **ADHESIVE AGENT FOR HIGH-FREQUENCY INDUCTION HEATING**
HAFTMITTEL FÜR HOCHFREQUENZ-INDUKTIONSERWÄRMUNG
AGENT ADHÉSIF POUR CHAUFFAGE PAR INDUCTION À HAUTE FRÉQUENCE

(30) Priority: 30.06.2020 JP 2020113564; 30.06.2020 JP 2020113539; 26.01.2021 JP 2021010550
(43) Date of publication of application: 28.05.2025
(62) Document number(s) of the earlier application(s) in accordance with Art. 76 EPC: 21832292.3 / 4 155 359
(73) Proprietor: LINTEC CORPORATION, Itabashi-ku Tokyo 173-0001 (JP)
(72) Inventor: TSUCHIBUCHI, Koji, Tokyo, 173-0001 (JP); TAYA, Naoki, Tokyo, 173-0001 (JP)
(74) Representative: Gille Hrabal Partnerschaftsgesellschaft mbB Patentanwälte

(56) References cited:
- CN-A- 110 713 798
- US-A1- 2015 018 478

## Description

### TECHNICAL FIELD

The present invention relates to an adhesive agent for high-frequency dielectric heating.

### BACKGROUND ART

As a method of bonding adherends having difficulty in bonding, there has been recently proposed, for example, a method including performing a dielectric heating treatment, an induction heating treatment, a supersonic welding treatment, a laser welding treatment, or the like with an adhesive agent interposed between the adherends, the adhesive agent being made by mixing a heat-generating material into a predetermined resin.

A bonding method using glass as adherends is exemplified by techniques as described below.

For example, Patent Literature 1 describes, as a thermoplastic resin composition for bonding glass and an inorganic-reinforced thermoplastic resin, a thermoplastic resin composition containing: a heat-generating body that generates heat by high-frequency induction; and a thermoplastic resin modified by a monomer having a functional group reactive with inorganic substances in the presence of moisture and having a melting point in a range from 90 degrees C to 200 degrees C.

As another bonding method, for example, Patent Literature 2 describes a glass adhesion sheet having high adhesion performance to a glass surface through vacuum lamination. The glass adhesion sheet contains a silane-modified polyethylene resin in which an ethylenically unsaturated silane compound is graft-polymerized onto low-density polyethylene.
Prior art document WO 2018/079355 A relates to (see claim 1 of said prior art document):
   A dielectric heating adhesive film for bonding a pair of adherends made of the same material or different materials by dielectric heating treatment, characterized in that it contains: a first thermoplastic resin having a predetermined solubility parameter (δ1) as component A1; a second thermoplastic resin having a solubility parameter (δ2) larger than that of the first thermoplastic resin as component A2; and a dielectric filler as component B.
Prior art document WO 2018/147351 A relates to (see claim 1 of said prior art document):
   A dielectric heating adhesive film for bonding a plurality of adherends made of the same material or different materials by dielectric heating treatment, comprising: a thermoplastic resin as component A; and a dielectric filler as component B, wherein component A contains one or more resins selected from the group consisting of olefin-vinyl acetate copolymers and maleic anhydride modified polyolefins, and the olefin-vinyl acetate copolymer contains 2 mass% or more of structural units derived from vinyl acetate.
Prior art document JP H03 137179 A relates to (see claim 1 of said prior art document):
   A high-frequency induction heating adhesive is a two-component thermosetting resin consisting of a liquid epoxy resin to which 10 to 70 parts by weight of the following compound (A), (B) or (C) is added per 100 parts by weight of a bisphenol A or bisphenol F epoxy resin having an equivalent weight of 170 to 2,000, and a polyaminoamide, in which magnetic powder is dispersed, and the cured product has a tensile modulus of elasticity of 3.0 to 60 kgf/mm². (A): CTBN-modified bisphenol A-type epoxy resin (B): Polyalkylene glycol diglycidyl ether (C): Diglycidyl ester of higher aliphatic dicarboxylic acid having a molecular weight of 300 or more.
Prior art document US 2015/018478 A relates to (see claim 1 of said prior art document):
   An improvement in a method of forming a polyolefin-based article that includes (a) incorporating into a polyolefin formulation a filler that is capable of being excited by a high frequency electromagnetic field; (b) forming a substrate from the polyolefin formulation, the substrate having at least one surface; and (c) subjecting the surface of the polyolefin substrate to the high frequency electromagnetic field under conditions such that the substrate is welded to a second surface of the polyolefin substrate or to a surface of a second polyolefin substrate to form a polyolefin-based article; wherein the improvement comprises
   (1) including in the polyolefin formulation a zeolite that is ion exchanged with sodium, calcium, or potassium, in an amount of at least 5 weight percent based on weight of the polyolefin formulation; and
   (2) employing as a base polymer in the polyolefin formulation a polyolefin selected from the group consisting of (a) a homogeneously branched, linear or substantially linear ethylene/α-olefin copolymer having a density from 0.865 to 0.905 grams per cubic centimeter and a melt index (measured at 190° C. at 2.13 kilograms) from 0.5 to 30 grams per 10 minutes; (b) a homogeneously branched propylene/α-olefin copolymer having a density from 0.863 to 0.885 grams per cubic centimeter and a melt flow rate (measured at 230° C. at 2.13 kilograms) from 2 to 30 grams per 10 minutes; (c) a combination thereof;
   provided that the base polymer has a melting temperature below 100° C.; and
   further provided that the polyolefin substrate exhibits as properties a cohesive welding failure and a weld strength for a 10 mil (0.254 millimeter) thickness that is greater than 7 pounds per inch (1.23 Newtons per millimeter) at a welding time of less than or equal to 6 seconds, to form a polyolefin-based article.

### CITATION LIST

### PATENT LITERATURE(S)

Patent Literature 1: JP2002-097445 A
Patent Literature 2: JP2016-068426 A

### SUMMARY OF THE INVENTION

### PROBLEM(S) TO BE SOLVED BY THE INVENTION

**In** a case of using the thermoplastic resin composition described in Patent Literature 1, a lot of energy is required for adhesion to glass. In a case of using the glass adhesion sheet described in Patent Literature 2, a pressure retaining time during vacuum lamination required for adhesion to glass is long. Further, there is a demand for a composition and a sheet used for bonding to glass that are not likely to decrease in adhesion force during storage after production and before use.

An object of the invention is to provide an adhesive agent for high-frequency dielectric heating that is bondable, even with low consumption energy, to glass with high bonding strength and is not likely to decrease in adhesion force with time.

### MEANS FOR SOLVING THE PROBLEM(S)

According to an aspect of the invention, there is provided an adhesive agent for high-frequency dielectric heating that at least contains a thermoplastic resin (A) and a dielectric material that generates heat upon application of a high-frequency electric field, in which the thermoplastic resin (A) at least contains a first thermoplastic resin (A1) and a second thermoplastic resin (A2), the first thermoplastic resin (A1) is a silane-modified thermoplastic resin, and the second thermoplastic resin (A2) is a thermoplastic resin that is not silane-modified.

**In** the adhesive agent for high-frequency dielectric heating according to the aspect of the invention, the first thermoplastic resin (A1) is preferably a silane-modified polyolefin resin.

**In** the adhesive agent for high-frequency dielectric heating according to the aspect of the invention, the second thermoplastic resin (A2) is preferably a polyolefin resin that is not silane-modified.

**In** the adhesive agent for high-frequency dielectric heating according to the aspect of the invention, the second thermoplastic resin (A2) preferably has a polar site.

In the adhesive agent for high-frequency dielectric heating according to the aspect of the invention, the polar site of the second thermoplastic resin (A2) is preferably an acid site.

In the adhesive agent for high-frequency dielectric heating according to the aspect of the invention, the acid site of the second thermoplastic resin (A2) is preferably an acid anhydride structure.

In the adhesive agent for high-frequency dielectric heating according to the aspect of the invention, a main composition of the first thermoplastic resin (A1) is preferably ethylene or propylene.

In the adhesive agent for high-frequency dielectric heating according to the aspect of the invention, a main composition of the second thermoplastic resin (A2) is preferably ethylene or propylene.

In the adhesive agent for high-frequency dielectric heating according to the aspect of the invention, the main composition of the first thermoplastic resin (A1) is preferably identical to the main composition of the second thermoplastic resin (A2).

In the adhesive agent for high-frequency dielectric heating according to the aspect of the invention, a volume content ratio of the first thermoplastic resin (A1) in the thermoplastic resin (A) contained in the adhesive agent for high-frequency dielectric heating is preferably in a range from 15 vol% to 80 vol%.

In the adhesive agent for high-frequency dielectric heating according to the aspect of the invention, a melt flow rate at 190 degrees C of the thermoplastic resin (A) is preferably in a range from 2 g/10 min to 50 g/10 min.

In the adhesive agent for high-frequency dielectric heating according to the aspect of the invention, a volume content ratio of the dielectric material in the adhesive agent for high-frequency dielectric heating is preferably in a range from 5 vol% to 50 vol%.

In the adhesive agent for high-frequency dielectric heating according to the aspect of the invention, the dielectric material is preferably a dielectric filler (B).

In the adhesive agent for high-frequency dielectric heating according to the aspect of the invention, the dielectric filler (B) preferably contains at least one selected from the group consisting of zinc oxide, silicon carbide, barium titanate, and titanium oxide.

In the adhesive agent for high-frequency dielectric heating according to the aspect of the invention, a volume average particle diameter of the dielectric filler (B) is preferably in a range from 1 µm to 30 µm, and the volume average particle diameter is a volume average particle diameter obtained by measuring a particle size distribution of the dielectric filler (B) by a laser diffraction/scattering method and performing calculation from a result of the particle size distribution measurement in accordance with JIS Z 8819-2: 2001.

The adhesive agent for high-frequency dielectric heating according to the aspect of the invention is preferably in a form of an adhesive sheet.

According to the aspect of the invention, there is provided an adhesive agent for high-frequency dielectric heating that is bondable, even with low consumption energy, to glass with high bonding strength and is not likely to decrease in adhesion force with time.

### BRIEF EXPLANATION OF DRAWINGS

Fig. 1A is a schematic cross-sectional view of an exemplary high-frequency dielectric heating adhesive sheet.
Fig. 1B is a schematic cross-sectional view of another exemplary high-frequency dielectric heating adhesive sheet.
Fig. 1C is a schematic cross-sectional view of still another exemplary high-frequency dielectric heating adhesive sheet.
Fig. 2 is schematic diagram for illustrating a high-frequency dielectric heating treatment using the exemplary high-frequency dielectric heating adhesive sheet and a dielectric heating device.
Fig. 3A is a schematic perspective view of an exemplary form of a molding body according to an exemplary embodiment.
Fig. 3B is a schematic perspective view of another exemplary form of the molding body according to the exemplary embodiment.
Fig. 3C is a schematic perspective view of still another exemplary form of the molding body according to the exemplary embodiment.

### DESCRIPTION OF EMBODIMENT(S)

### Adhesive Agent for High-Frequency Dielectric Heating

An adhesive agent for high-frequency dielectric heating according to an exemplary embodiment at least contains a thermoplastic resin (A) and a dielectric material that generates heat upon application of a high-frequency electric field, in which the thermoplastic resin (A) at least contains a first thermoplastic resin (A1) and a second thermoplastic resin (A2), the thermoplastic resin (A1) is a silane-modified thermoplastic resin, and the second thermoplastic resin (A2) is any other thermoplastic resin than the silane-modified thermoplastic resin.

The high-frequency electric field is an electric field of which direction is reversed by high frequency waves.

The dielectric material is a material that generates heat upon application of a high-frequency electric field. Preferably, the dielectric material is a material that generates heat upon application of a high-frequency electric field having a frequency range from 3 MHz to 300 MHz. Preferably, the dielectric material is at least one of a dielectric resin or a dielectric filler (B). The dielectric material is more preferably a dielectric filler (B), because the dielectric filler (B) contained in a high-frequency dielectric heating adhesive sheet is not likely to deteriorate when the high-frequency dielectric heating adhesive sheet is processed.

Explanation is made below about a case where a high-frequency dielectric heating adhesive sheet according to the exemplary embodiment contains the dielectric filler (B) as the dielectric material.

### Thermoplastic Resin (A)

The adhesive agent for high-frequency dielectric heating according to the exemplary embodiment contains at least two types of thermoplastic resins (A). The adhesive agent for high-frequency dielectric heating according to the exemplary embodiment at least contains the first thermoplastic resin (A1) and the second thermoplastic resin (A2).

The first thermoplastic resin (A1) according to the exemplary embodiment is a silane-modified thermoplastic resin. The silane-modified thermoplastic resin as the first thermoplastic resin (A1) may be any silane-modified thermoplastic resin. For example, the silane-modified thermoplastic resin as the first thermoplastic resin (A1) is preferably at least one selected from the group consisting of a copolymer of a silyl group-containing compound and a thermoplastic resin and a silane-modified thermoplastic resin in which a silyl group-containing compound is graft-polymerized onto a thermoplastic resin.

The second thermoplastic resin (A2) according to the exemplary embodiment is a thermoplastic resin that is not silane-modified. The second thermoplastic resin (A2) may be any thermoplastic resin that is not silane-modified.

The adhesive agent for high-frequency dielectric heating containing a silane-modified thermoplastic resin as the thermoplastic resin (A) easily exhibits high adhesion force to glass. However, the adhesive agent for high-frequency dielectric heating only containing a silane-modified thermoplastic resin as the thermoplastic resin is likely to decrease in adhesion performance. Presumably, the reason for decrease in adhesion performance is that the silane-modified thermoplastic resin easily absorbs water and the cross-linking reaction between reactive groups of the silane-modified thermoplastic resin proceeds with time.

When the adhesive agent for high-frequency dielectric heating contains, as the thermoplastic resin, not only a silane-modified thermoplastic resin but also a thermoplastic resin that is not silane-modified, unexpected decrease in adhesion performance with time is preventable. It is considered that the adhesive agent for high-frequency dielectric heating according to the exemplary embodiment, which also contains a thermoplastic resin that is not silane-modified, is not likely to absorb water, causing the reactive groups to separate from each other to inhibit the progress of cross-linking reaction. When the adhesive agent for high-frequency dielectric heating contains not only a silane-modified thermoplastic resin but also a thermoplastic resin that is not silane-modified, the viscosity of the adhesive agent for high-frequency dielectric heating is easily adjustable and processability is easily imparted to the adhesive agent for high-frequency dielectric heating.

**In** terms of, for example, meltability and possession of a predetermined heat resistance, respective thermoplastic resins for the first thermoplastic resin (A1) and the second thermoplastic resin (A2) are preferably each independently at least one selected from the group consisting of a polyolefin resin, a styrene resin, a polyacetal resin, a polycarbonate resin, a poly(meth)acrylic resin, a polyamide resin, a polyimide resin, a polyvinyl acetate resin, a phenoxy resin, and a polyester resin.

The thermoplastic resin for the silane-modified thermoplastic resin is preferably a polyolefin resin. That is, the first thermoplastic resin (A1) is preferably a silane-modified polyolefin resin. Using silane-modified polyolefin as the first thermoplastic resin (A1) is likely to provide the adhesive agent for high-frequency dielectric heating that is excellent in formability, is easy to melt by high-frequency dielectric heating, and has high adhesion performance. The formability of the adhesive agent for high-frequency dielectric heating means the workability of the adhesive agent for high-frequency dielectric heating into a desired form (e.g., a sheet or a molding body). Herein, the adhesive agent for high-frequency dielectric heating according to the exemplary embodiment, which is in the form of an adhesive sheet, is occasionally referred to as a high-frequency dielectric heating adhesive sheet.

The thermoplastic resin for the thermoplastic resin that is not silane-modified is preferably a polyolefin resin. That is, the second thermoplastic resin (A2) is preferably a polyolefin resin that is not silane-modified. Using the polyolefin resin that is not silane-modified as the second thermoplastic resin (A2) is likely to provide the adhesive agent for high-frequency dielectric heating that is excellent in formability, is easy to melt by high-frequency dielectric heating, and has high adhesion performance. Since polyolefin itself has high hydrophobicity, the polyolefin resin that is not silane-modified also exhibits high effect in inhibiting a decrease in adhesion performance with time.

More preferably, the first thermoplastic resin (A1) is a silane-modified polyolefin resin, and the second thermoplastic resin (A2) is a polyolefin resin that is not silane-modified. The silane-modified polyolefin resin has an excellent compatibility with the polyolefin resin that is not silane-modified. Thus, containing both the silane-modified polyolefin resin and the polyolefin resin that is not silane-modified more easily provides the adhesive agent for high-frequency dielectric heating that is excellent in formability, has high adhesion performance, and is unlikely to decrease in adhesion performance with time.

Although not particularly limited, the silane-modified polyolefin resin is preferably, for example, at least one selected from the group consisting of a copolymer of a silyl group-containing compound and olefin and silane-modified polyolefin in which a silyl group-containing compound is graft-polymerized onto polyolefin.

Preferably, olefin copolymerized with a silyl group-containing compound is, for example, α-olefin having 2 to 20 carbon atoms. Preferably, α-olefin having 2 to 20 carbon atoms is, for example, at least one selected from the group consisting of ethylene, propylene, 1-butene, 1-pentene, 1-hexene, 1-octene, 1-heptene, 4-methyl-1-pentene, 4-methyl-1-hexene, and 4,4-dimethyl-1-pentene. More preferably, α-olefin having 2 to 20 carbon atoms is at least one of ethylene or propylene. One or two or more of olefins may be copolymerized with a silyl group-containing compound.

Polyolefin onto which a silyl group-containing compound is graft-polymerized is exemplified by a homopolymer of the above-described olefins and a copolymer of two or more thereof. A homopolymer or a copolymer having a monomer unit derived from at least one olefin of ethylene or propylene is preferable. Further, silane-modified polyolefin in which a silyl group-containing compound is graft-polymerized onto polyolefin having a reactive group beforehand is also preferable.

Examples of the silyl group-containing compound include vinylsilane such as vinyltrimethoxysilane, vinyltriethoxysilane, vinyltripropoxysilane, vinyltriisopropoxysilane, vinyltributoxysilane, vinyltriphenoxysilane, vinyltribenzyloxysilane, vinyltrimethylenedioxysilane, vinylpropionyloxysilane, vinyltriacetoxysilane, vinyltricarboxysilane, vinyltriacetylsilane, vinyltrichlorosilane, vinyltrismethylethylketoximesilane, vinyltriisopropenoxysilane, and vinylmethyldimethoxysilane; (meth)acrylsilanes such as (meth)acryloxymethyltrimethoxysilane; and styrylsilanes such as styryltrimethoxysilane. Herein, the "(meth)acryl" is used as a term referring to both "acryl" and "methacryl". The same applies to other similar terms.

Also preferably, examples of the polyolefin resins for the first thermoplastic resin (A1) and the second thermoplastic resin (A2) include a resin including a homopolymer such as polyethylene, polypropylene, polybutene, and polymethylpentene, and an α-olefin resin including a copolymer of a monomer selected from the group consisting of ethylene, propylene, butene, hexene, octene, and 4-methylpentene.

A main composition of the first thermoplastic resin (A1) is preferably ethylene or propylene in view of providing the adhesive agent for high-frequency dielectric heating that exhibits excellent mechanical strength, high formability, and stable adhesive characteristics.

A main composition of the second thermoplastic resin (A2) is preferably ethylene or propylene in view of providing the adhesive agent for high-frequency dielectric heating that exhibits excellent mechanical strength, high formability, and stable adhesive characteristics.

Herein, the wording "a main composition of the thermoplastic resin" refers to, for example, in a case where the thermoplastic resin is a polymer, the most contained repeating unit in the polymer among repeating units contained in the polymer. In a case where the thermoplastic resin is a polymer derived from a single monomer, "a main composition of the thermoplastic resin" refers to the monomer unit (repeating unit). In a case where the thermoplastic resin is a copolymer, "a main composition of the thermoplastic resin" refers to the most contained repeating unit in the polymer. In a case where the thermoplastic resin is a copolymer, "a main composition of the thermoplastic resin" in the copolymer refers to a repeating unit (monomer unit) contained at a content of 30 mass% or more, a repeating unit contained at a content of more than 30 mass% in an example, a repeating unit contained at a content of 40 mass% or more in another example, or a repeating unit contained at a content of 50 mass% or more in still another example. Further, in a case where the thermoplastic resin is a copolymer, two or more repeating units may be the most contained repeating units.

Preferably, the first thermoplastic resin (A1) and the second thermoplastic resin (A2) have the same main composition.

For example, when the first thermoplastic resin (A1) is silane-modified polypropylene containing, as the repeating unit, 50 mass% or more of a propylene unit and the second thermoplastic resin (A2) is maleic anhydride-modified polypropylene containing, as the repeating unit, 50 mass% or more of a propylene unit, the main composition (repeating unit) of the first thermoplastic resin (A1) and the main composition (repeating unit) of the second thermoplastic resin are propylene, which is the same main composition.

When the first thermoplastic resin (A1) and the second thermoplastic resin (A2) have the same main composition, the compatibility between the first thermoplastic resin (A1) and the second thermoplastic resin (A2) is improved, facilitating the separation of the reactive groups of the first thermoplastic resin (A1).

The volume content ratio of the first thermoplastic resin (A1) in the thermoplastic resin (A) contained in the adhesive agent for high-frequency dielectric heating is preferably 15 vol% or more, more preferably 25 vol% or more, and still more preferably 40 vol% or more.

The volume content ratio of the first thermoplastic resin (A1) in the thermoplastic resin (A) contained in the adhesive agent for high-frequency dielectric heating is preferably 80 vol% or less, more preferably 70 vol% or less, and still more preferably 60 vol% or less.

At a volume content ratio of the first thermoplastic resin (A1) in the thermoplastic resin (A) of 15 vol% or more, the adhesion performance to glass is easily obtainable.

At a volume content ratio of the first thermoplastic resin (A1) in the thermoplastic resin (A) of 80 vol% or less, preservation stability is easily obtainable.

The volume content ratio of the second thermoplastic resin (A2) in the thermoplastic resin (A) contained in the adhesive agent for high-frequency dielectric heating is preferably 20 vol% or more, more preferably 30 vol% or more, and still more preferably 40 vol% or more.

The volume content ratio of the second thermoplastic resin (A2) in the thermoplastic resin (A) contained in the adhesive agent for high-frequency dielectric heating is preferably 85 vol% or less, more preferably 75 vol% or less, and still more preferably 60 vol% or less.

At a volume content ratio of the second thermoplastic resin (A2) in the thermoplastic resin (A) of 20 vol% or more, preservation stability of the adhesive agent for high-frequency dielectric heating is easily obtainable.

At a volume content ratio of the second thermoplastic resin (A2) in the thermoplastic resin (A) of 85 vol% or less, a decrease in adhesion performance to glass is easily preventable.

The total of the volume content ratios of the first thermoplastic resin (A1) and the second thermoplastic resin (A2) in the thermoplastic resin (A) contained in the adhesive agent for high-frequency dielectric heating is 100 vol% or less.

The volume ratio between the first thermoplastic resin (A1) and the second thermoplastic resin (A2) in the adhesive agent for high-frequency dielectric heating is preferably from 15:85 to 80:20, more preferably from 25:75 to 70:30, and still more preferably from 40:60 to 60:40.

The second thermoplastic resin (A2) preferably has a polar site. Examples of the polar site include a hydroxyl group, a carboxy group, an epoxy group, an acryloyl group, an acetoxy group, a sulfo group, a phospho group, a phenol group, a vinyl acetate structure, and an acid anhydride structure. The polar site may be introduced into the resin by copolymerization or modification. The thermoplastic resin having a polar site is preferable as exhibiting high adhesion force with respect to an adherend. The second thermoplastic resin (A2) is preferably a polyolefin resin having a polar site.

When the adhesive agent for high-frequency dielectric heating contains the first thermoplastic resin (A1) and the second thermoplastic resin (A2) having a polar site, the volume ratio between the first thermoplastic resin (A1) and the second thermoplastic resin (A2) having the polar site in the adhesive agent for high-frequency dielectric heating is preferably from 15:85 to 80:20, more preferably from 25:75 to 70:30, and still more preferably from 40:60 to 60:40.

The polar site of the second thermoplastic resin (A2) is also preferably an acid site. The second thermoplastic resin (A2) is more preferably a polyolefin resin having an acid site. Examples of the acid site of the second thermoplastic resin (A2) include a carboxy group, a sulfo group, a phospho group, a phenol group, and an acid anhydride structure. The second thermoplastic resin (A2) having an acid site can inhibit a decrease in adhesion performance that may otherwise be caused by a decrease in the ratio of silane-modified thermoplastic resin in the adhesive agent for high-frequency dielectric heating.

The second thermoplastic resin (A2) is also preferably a resin having an acid-modified structure as a polar site, more preferably a polyolefin resin having an acid-modified structure. The acid-modified structure as the polar site is a site that is introduced by acid modification of a thermoplastic resin (e.g., a polyolefin resin). A compound used for acid modification of a thermoplastic resin (e.g., polyolefin resin) is exemplified by an unsaturated carboxylic acid derivative component derived from any one of an unsaturated carboxylic acid, an acid anhydride of an unsaturated carboxylic acid, and an ester of an unsaturated carboxylic acid. Herein, the polyolefin resin having the acid-modified structure is occasionally referred to as an acid-modified polyolefin resin.

Examples of the unsaturated carboxylic acid include an acrylic acid, a methacrylic acid, a maleic acid, a fumaric acid, an itaconic acid, and a citraconic acid.

Examples of the acid anhydride of the unsaturated carboxylic acid include maleic anhydride, itaconic anhydride, and citraconic anhydride.

Examples of the ester of the unsaturated carboxylic acid include methyl acrylate, ethyl acrylate, methyl methacrylate, ethyl methacrylate, butyl methacrylate, dimethyl maleate, monomethyl maleate, dimethyl fumarate, diethyl fumarate, dimethyl itaconate, diethyl itaconate, dimethyl citraconate, diethyl citraconate, and dimethyl tetrahydrophthalate anhydride.

### Polyolefin Resin Having Polar Site

Regarding a polyolefin resin having a polar site, the polar site is not particularly limited as long as the site can polarize the polyolefin resin. The polyolefin resin having the polar site is preferable as exhibiting high adhesion force with respect to an adherend.

The polyolefin resin having the polar site may be a copolymer of an olefin monomer and a monomer having a polar site. Further, the polyolefin resin having the polar site may be a resin provided by introducing, through modification such as addition reaction, a polar site into an olefin polymer obtained by polymerizing olefin monomers.

The type of the olefin monomer constituting the polyolefin resin having the polar site is not particularly limited. Examples of the olefin monomer include ethylene, propylene, butene, hexene, octene, and 4-methyl-1-pentene. One of the above examples may be used alone or a combination of two or more thereof may be used as the olefin monomer.

Preferably, the olefin monomer is at least one of ethylene or propylene in view of providing the adhesive agent for high-frequency dielectric heating that has excellent mechanical strength and stable adhesive characteristics.

Preferably, a constituent unit derived from olefin in the polyolefin resin having the polar site is a constituent unit derived from ethylene or propylene.

When the polyolefin resin as the second thermoplastic resin (A2) is a copolymer of an olefin monomer and a monomer having a polar site, the copolymer contains a constituent unit derived from the monomer having the polar site at a content of preferably 2 mass% or more, more preferably 4 mass% or more, still more preferably 5 mass% or more, and still further more preferably 6 mass% or more. Further, the copolymer contains a constituent unit derived from the monomer having the polar site at a content of preferably 30 mass% or less, more preferably 25 mass% or less, still more preferably 20 mass% or less, and still further more preferably 15 mass% or less.

The copolymer containing 2 mass% or more of a constituent unit derived from the monomer having the polar site improves the bonding strength of the adhesive agent for high-frequency dielectric heating. Further, the copolymer containing 30 mass% or less of a constituent unit derived from the monomer having the polar site inhibits an extreme increase in tackiness of the second thermoplastic resin (A2). As a result, the adhesive agent for high-frequency dielectric heating is not likely to have difficulty in a forming process.

When the polyolefin resin as the second thermoplastic resin (A2) is a copolymer of an olefin monomer and a monomer having an acid site, the ratio of a constituent unit derived from the monomer having the acid site in the copolymer is preferably in a range similar to that of the ratio of a constituent unit derived from a monomer having a polar site in a copolymer of an olefin monomer and the monomer having the polar site. The effect achievable by virtue of the ratio being in the range is also similar to that achievable in a case where the polyolefin resin as the second thermoplastic resin (A2) is a copolymer of an olefin monomer and a monomer having a polar site.

When the polyolefin resin as the second thermoplastic resin (A2) has an acid-modified structure, the rate of acid modification is preferably 0.01 mass% or more, more preferably 0.1 mass% or more, and still more preferably 0.2 mass% or more.

When the polyolefin resin as the second thermoplastic resin (A2) has an acid-modified structure, the rate of acid modification is preferably 30 mass% or less, more preferably 20 mass% or less, and still more preferably 10 mass% or less.

When the second thermoplastic resin (A2) has an acid-modified structure, a rate of acid modification of 0.01 mass% or more improves the bonding strength of the adhesive agent for high-frequency dielectric heating. Further, a rate of acid modification of 30 mass% or less inhibits an extreme increase in tackiness of the second thermoplastic resin (A2). As a result, the adhesive agent for high-frequency dielectric heating is not likely to have difficulty in a forming process.

Herein, the rate of acid modification refers to a percentage of a mass of a site derived from the acid relative to a total mass of the acid-modified polyolefin.

The acid site of the second thermoplastic resin (A2) is also preferably an acid anhydride structure. The second thermoplastic resin (A2) is more preferably a polyolefin resin having an acid anhydride structure. The second thermoplastic resin (A2) having an acid anhydride structure is not likely to interact with the dielectric filler (B), making it possible to inhibit torque increase or gelation at the time of forming the adhesive agent for high-frequency dielectric heating into a sheet.

More preferably, the acid anhydride structure is a maleic anhydride structure. The maleic anhydride structure may be a group introduced by graft-modification of a thermoplastic resin or a maleic anhydride copolymer obtained by copolymerization of a monomer having a maleic anhydride structure.

**In** maleic anhydride-modified polyolefin, the rate of maleic anhydride modification is preferably in a range similar to that of the rate of modification in a case where the polyolefin resin as the second thermoplastic resin (A2) has an acid-modified structure. The effect achievable by virtue of the rate being in the range is also similar to that achievable in a case where the polyolefin resin as the second thermoplastic resin (A2) has an acid-modified structure.

When the maleic anhydride-modified polyolefin is a copolymer of an olefin monomer and a monomer having a maleic anhydride structure, the ratio of a constituent unit derived from the monomer having the maleic anhydride structure in the copolymer is preferably in a range similar to that of the ratio of a constituent unit derived from a monomer having a polar site in a copolymer of an olefin monomer and the monomer having the polar site. The effect achievable by virtue of the ratio being in the range is also similar to that achievable in a case where the polyolefin resin as the second thermoplastic resin (A2) is a copolymer of an olefin monomer and a monomer having a polar site.

Preferably, a constituent unit derived from olefin in the maleic anhydride-modified polyolefin is a constituent unit derived from ethylene or propylene. That is, the maleic anhydride-modified polyolefin is preferably a maleic anhydride-modified polyethylene resin or a maleic anhydride-modified polypropylene resin.

### MFR of Thermoplastic Resin

The **MFR** at 190 degrees C of the thermoplastic resin (A) is preferably 2 g/10min or more, more preferably 2.5 g/10 min or more, and still more preferably 3 g/10 min or more.

The **MFR** at 190 degrees C of the thermoplastic resin (A) is preferably 50 g/10 min or less, more preferably 30 g/10 min or less, and still more preferably 20 g/10 min or less.

When the **MFR** at 190 degrees C of the thermoplastic resin (A) is 2 g/10 min or more, sheet formability is excellent and wet-spreadability of the adhesive agent for high-frequency dielectric heating at the time of bonding is favorable, easily exhibiting bonding strength in a short time.

When the MFR at 190 degrees C of the thermoplastic resin (A) is 50 g/10 min or less, viscosity of the adhesive agent for high-frequency dielectric heating under a dielectric heating treatment is not likely to be too low. When the viscosity of the adhesive agent for high-frequency dielectric heating is too low, the resin amount between adherends is reduced at the time of bonding, making it difficult to exhibit bonding strength. Inhibiting the decrease in viscosity easily provides bonding strength.

The MFR at 190 degrees C of the thermoplastic resin (A) is measurable by a method described in Examples below.

### Dielectric Filler (B)

The dielectric filler (B) generates heat upon application of a high-frequency electric field.

Preferably, the dielectric filler (B) is a filler that generates heat upon application of a high-frequency electric field having a frequency range of 3 MHz to 300 MHz. Preferably, the dielectric filler (B) is a filler that generates heat upon application of a high-frequency electric field having, within the frequency range of 3 MHz to 300 MHz, for example, a frequency of 13.56 MHz, 27.12 MHz, or 40.68 MHz.

### Type of Dielectric Filler (B)

The dielectric filler (B) is preferably a single one or a combination of two or more of zinc oxide, silicon carbide (SiC), anatase-type titanium oxide, barium titanate, barium titanate zirconate, lead titanate, potassium niobate, rutile-type titanium oxide, hydrated aluminum silicate, inorganic substances having crystallization water such as hydrated aluminosilicate salt of alkali metal, and inorganic substances having crystallization water such as hydrated aluminosilicate salt of alkaline earth metal.

Preferably, the dielectric filler (B) contains at least one selected from the group consisting of zinc oxide, silicon carbide, barium titanate, and titanium oxide.

The dielectric filler (B) is further preferably zinc oxide from among the dielectric fillers exemplified above, because zinc oxide has a lot of types, and various shapes and sizes thereof are selectable, which allows for improving the adhesive characteristics and mechanical characteristics of the adhesive agent for high-frequency dielectric heating in accordance with the purpose of use. Using zinc oxide as the dielectric filler (B) results in a colorless adhesive agent for high-frequency dielectric heating. Zinc oxide is small in density among dielectric fillers. Thus, when adherends are bonded using an adhesive agent for high-frequency dielectric heating that contains zinc oxide as the dielectric filler (B), a total weight of the joined body is less likely to increase than a case where an adhesive agent containing another dielectric filler is used. Zinc oxide, which is not extremely high in hardness among ceramics, is not likely to damage a device for producing an adhesive agent for high-frequency dielectric heating. Zinc oxide, which is an inactive oxide, is blendable with a thermoplastic resin with a small damage thereto.

Further, titanium oxide as the dielectric filler (B) is preferably at least one of anatase-type titanium oxide or rutile-type titanium oxide, more preferably anatase-type titanium oxide in terms of an excellent dielectric property.

### Volume Content Ratio

The volume content ratio of the dielectric filler (B) in the adhesive agent for high-frequency dielectric heating is preferably 5 vol% or more, more preferably 8 vol% or more, and still more preferably 10 vol% or more.

The volume content ratio of the dielectric filler (B) in the adhesive agent for high-frequency dielectric heating is preferably 50 vol% or less, more preferably 40 vol% or less, still more preferably 35 vol% or less, and still further more preferably 25 vol% or less.

At a volume content ratio of the dielectric filler (B) in the adhesive agent for high-frequency dielectric heating of 5 vol% or more, heat generation performance is improved, and the adhesive agent for high-frequency dielectric heating and the adherend made of glass are likely to be firmly bonded.

At a volume content ratio of the dielectric filler (B) in the adhesive agent for high-frequency dielectric heating of 50 vol% or less, flexibility as a sheet is easily obtainable and a decrease in toughness is easily preventable, facilitating machining of the adhesive agent for high-frequency dielectric heating into a desired form in a subsequent process.

Since the thermoplastic resin (A) and the dielectric filler (B) are contained in the adhesive agent for high-frequency dielectric heating according to the exemplary embodiment, the volume content ratio of the dielectric filler (B) is preferably 5 vol% or more, more preferably 8 vol% or more, and still more preferably 10 vol% or more with respect to a total volume of the thermoplastic resin (A) and the dielectric filler (B). Further, the volume content ratio of the dielectric filler (B) is preferably 50 vol% or less, more preferably 40 vol% or less, still more preferably 35 vol% or less, and still further more preferably 25 vol% or less with respect to a total volume of the thermoplastic resin (A) and the dielectric filler (B).

The above explanation about the volume content ratio of the dielectric material in the adhesive layer is made assuming that the dielectric material is the dielectric filler (B). The volume content ratio of the dielectric material in the adhesive layer as described above is not limited to the case where the dielectric material is the dielectric filler (B). The volume content ratio of any other dielectric material than the dielectric filler (B) also preferably has a similar range to that of the volume content ratio of the dielectric filler (B) in the adhesive layer. Specifically, the volume content ratio of the dielectric material in the adhesive layer is preferably in a range from 5 vol% to 50 vol%.

### Average Particle Diameter

The volume average particle diameter of the dielectric filler (B) is preferably 1 µm or more, more preferably 2 µm or more, and still more preferably 3 µm or more.

The volume average particle diameter of the dielectric filler (B) is preferably 30 µm or less, more preferably 25 µm or less, and still more preferably 20 µm or less.

At a volume average particle diameter of the dielectric filler (B) of 1 µm or more, the adhesive agent for high-frequency dielectric heating exhibits high heat generation performance upon application of a high-frequency electric field, and the adhesive agent for high-frequency dielectric heating and the adherend made of glass can be firmly bonded in a short time.

At a volume average particle diameter of the dielectric filler (B) of 30 µm or less, the adhesive agent for high-frequency dielectric heating exhibits high heat generation performance upon application of a high-frequency electric field, and the adhesive agent for high-frequency dielectric heating and the adherend made of glass can be firmly bonded in a short time. Further, a decrease in strength of the adhesive agent for high-frequency dielectric heating is preventable at a volume average particle diameter of the dielectric filler (B) of 30 µm or less.

The volume average particle diameter of the dielectric filler (B) is measured by a method as described below. A particle size distribution of the dielectric filler (B) is measured by a laser diffraction/scattering method and the volume average particle diameter is calculated from a result of the particle size distribution measurement in accordance with JIS Z 8819-2: 2001.

When the adhesive agent for high-frequency dielectric heating according to the exemplary embodiment is an adhesive sheet (high-frequency dielectric heating adhesive sheet), an average particle diameter D_{F} of the dielectric filler (B) and a thickness T of the high-frequency dielectric heating adhesive sheet preferably satisfy a relation of 1 ≤ T/D_{F} ≤ 2500.

T/D_{F} is preferably 1 or more, preferably 2 or more, preferably 5 or more, more preferably 10 or more, and still more preferably 20 or more. When T/D_{F} is 1 or more, a decrease in bonding strength due to the contact between the dielectric filler (B) and the adherend at the time of bonding is preventable.

T/D_{F} is preferably 2,500 or less, preferably 2,000 or less, preferably 1,750 or less, more preferably 1,000 or less, still more preferably 500 or less, still further more preferably 100 or less, and yet still further more preferably 50 or less. When T/D_{F} is 2,500 or less, a load on a sheet production device during production of the high-frequency dielectric heating adhesive sheet can be reduced.

### Additives

The adhesive agent for high-frequency dielectric heating according to the exemplary embodiment may or may not contain an additive. When the adhesive agent for high-frequency dielectric heating according to the exemplary embodiment is a high-frequency dielectric heating adhesive sheet including a plurality of layers, at least one of the layers may or may not contain an additive. When at least one of the layers contains an additive, an adhesive layer that is included in the layers and contains the adhesive agent for high-frequency dielectric heating may or may not contain an additive.

When the adhesive agent for high-frequency dielectric heating according to the exemplary embodiment contains an additive, examples of the additive include a tackifier, a plasticizer, a wax, a colorant, an antioxidant, an ultraviolet absorber, an antimicrobial agent, a coupling agent, a viscosity modifier, an organic filler, and an inorganic filler. The organic filler and inorganic filler as the additive are different from the dielectric material (dielectric filler).

The tackifier and plasticizer allow for improving the melting characteristics and adhesive characteristics of the adhesive agent for high-frequency dielectric heating.

Examples of the tackifier include a rosin derivative, a polyterpene resin, an aromatic modified terpene resin, a hydride of an aromatic modified terpene resin, a terpene phenol resin, a coumarone-indene resin, an aliphatic petroleum resin, an aromatic petroleum resin, and a hydride of an aromatic petroleum resin.

Examples of the plasticizer include a petroleum process oil, a natural oil, diacid dialkyl, and a low-molecular-weight liquid polymer. Examples of the petroleum process oil include a paraffin process oil, a naphthene process oil, and an aromatic process oil. Examples of the natural oil include a castor oil and a tall oil. Examples of diacid dialkyl include dibutyl phthalate, dioctyl phthalate, and dibutyl adipate. Examples of the low-molecular-weight liquid polymer include liquid polybutene and liquid polyisoprene.

When the adhesive agent for high-frequency dielectric heating according to the exemplary embodiment contains an additive, the content ratio of the additive in the adhesive agent for high-frequency dielectric heating is, normally, based on a total mass of the adhesive agent for high-frequency dielectric heating, preferably 0.01 mass% or more, more preferably 0.05 mass% or more, and still more preferably 0.1 mass% or more. Further, the content ratio of the additive in the adhesive agent for high-frequency dielectric heating is preferably 20 mass% or less, more preferably 15 mass% or less, and still more preferably 10 mass% or less.

The adhesive agent for high-frequency dielectric heating according to the exemplary embodiment preferably contains no solvent. The adhesive agent for high-frequency dielectric heating containing no solvent is not likely to have a problem of volatile organic compounds (VOC) that may otherwise be caused by an adhesive agent used for bonding with an adherend.

Preferably, the adhesive agent for high-frequency dielectric heating according to the exemplary embodiment contains no conductive substance such as a metal, carbon, or a carbon compound containing carbon as a main component (e.g., carbon black). Preferably, the adhesive layer does not contain, for example, carbon steel, α iron, γ iron, δ iron, copper, brass, aluminum, iron-nickel alloy, iron-nickel-chromium alloy, carbon fiber, and carbon black.

When the adhesive agent for high-frequency dielectric heating according to the exemplary embodiment contains conductive substances, the content ratios of the conductive substances in the adhesive layer are each independently, based on a total mass of the adhesive layer, preferably 20 mass% or less, more preferably 10 mass% or less, still more preferably 5 mass% or less, still further more preferably 1 mass% or less, and yet still further more preferably 0.1 mass% or less.

Particularly preferably, the adhesive agent contains 0 mass% of the conductive substances.

When the adhesive agent contains 20 mass% or less of conductive substances, a problem of carbonization of a bonding portion and an adherend caused by electrical breakdown in a dielectric heating treatment is easily preventable.

The total of the content ratios of the thermoplastic resin (A) and the dielectric filler (B) in the adhesive agent for high-frequency dielectric heating according to the exemplary embodiment is preferably 80 mass% or more, more preferably 90 mass% or more, and still more preferably 99 mass% or more.

### Form and Characteristics of Adhesive Agent for High-Frequency Dielectric Heating

Although not particularly limited, the form of the adhesive agent for high-frequency dielectric heating according to the exemplary embodiment is, for example, a sheet or a molding body. Herein, the molding body is different from the sheet. The sheet generally refers to a sheet-shaped object having a uniform thickness of 1 mm or less, 2 mm or less, or 5 mm or less.

### High-Frequency Dielectric Heating Adhesive Sheet

The adhesive agent for high-frequency dielectric heating according to the exemplary embodiment is preferably an adhesive sheet (high-frequency dielectric heating adhesive sheet). An exemplary high-frequency dielectric heating adhesive sheet according to the exemplary embodiment may consist of a single adhesive layer formed from the adhesive agent for high-frequency dielectric heating according to the exemplary embodiment, and another exemplary high-frequency dielectric heating adhesive sheet according to the exemplary embodiment may include a plurality of layers. In the high-frequency dielectric heating adhesive sheet consisting of a single adhesive layer, the adhesive layer itself corresponds to the high-frequency dielectric heating adhesive sheet. The form and characteristics of the high-frequency dielectric heating adhesive sheet thus correspond to those of the adhesive layer.

An exemplary high-frequency dielectric heating adhesive sheet according to the exemplary embodiment consists of a single adhesive layer with the high-frequency dielectric adhesive property. Note that the high-frequency dielectric heating adhesive sheet is not limited to the above exemplary sheet (sheet consisting of a single adhesive layer), but is also exemplified by a high-frequency dielectric heating adhesive sheet including any other layer than the adhesive layer.

As described above, the high-frequency dielectric heating adhesive sheet may consist of a single adhesive layer with the high-frequency dielectric adhesive property. Thus, herein, the terms "high-frequency dielectric heating adhesive sheet" and "adhesive layer" are occasionally interchangeable.

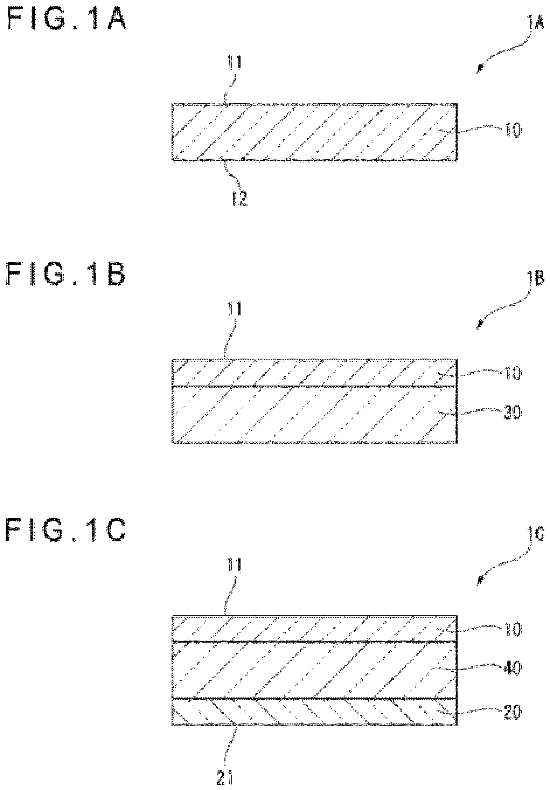

Figs. 1A to 1C are schematic diagrams of multiple examples of the high-frequency dielectric heating adhesive sheet according to the exemplary embodiment.

A high-frequency dielectric heating adhesive sheet 1A shown in Fig. 1A consists of a single adhesive layer 10. The high-frequency dielectric heating adhesive sheet 1A has a first surface 11 and a second surface 12 opposite the first surface 11.

Preferably, the high-frequency dielectric heating adhesive sheet consists of a single adhesive layer. The high-frequency dielectric heating adhesive sheet consisting of a single adhesive layer can have a small thickness and be easy to form.

A high-frequency dielectric heating adhesive sheet 1B shown in Fig. 1B includes the adhesive layer 10 and a base material 30 supporting the adhesive layer 10. Similar to the high-frequency dielectric heating adhesive sheet 1A, the adhesive layer 10 has the first surface 11. The base material 30, which may be any member that can support the adhesive layer 10, is exemplified by a resin film or a resin sheet that contains at least one resin selected from the group consisting of a polyolefin resin such as a polyethylene resin and a polypropylene resin, a polyester resin such as a polybutylene terephthalate resin and a polyethylene terephthalate resin, an acetate resin, an ABS resin, a polystyrene resin, and a vinyl chloride resin. The base material 30 may contain the dielectric filler (B). The dielectric filler (B) in the adhesive layer 10 and the dielectric filler in the base material 30 are mutually the same or different.

A high-frequency dielectric heating adhesive sheet 1C shown in Fig. 1C includes the adhesive layer 10, an adhesive layer 20, and an intermediate layer 40 provided between the adhesive layer 10 and the adhesive layer 20. The high-frequency dielectric heating adhesive sheet 1C has the first surface 11 and a second surface 21 that are opposite surfaces. The adhesive layer 10 of the high-frequency dielectric heating adhesive sheet 1C is occasionally referred to as a first adhesive layer, and the adhesive layer 20 is occasionally referred to as a second adhesive layer. In a high-frequency dielectric heating adhesive sheet in which the intermediate layer is provided between the first adhesive layer and the second adhesive layer, it is only required that the first adhesive layer satisfies the conditions for the adhesive layer of the high-frequency dielectric heating adhesive sheet according to the exemplary embodiment. In an example, both the first adhesive layer and the second adhesive layer have the same composition and characteristics. In another example, the second adhesive layer is a high-frequency dielectric heating adhesive layer different from the first adhesive layer in at least one of the composition or the characteristics. In still another example, the second adhesive layer is a normal adhesive agent layer different from the high-frequency dielectric heating adhesive layer, and the second adhesive layer without high-frequency dielectric heating adhesive property is exemplified by a dry-solidifying-type adhesive agent layer that is dried and solidified by evaporation of water or a solvent, or a sticky agent layer formed from a sticky agent (pressure-sensitive adhesive agent).

### Thickness of High-Frequency Dielectric Heating Adhesive Sheet

The thickness of the high-frequency dielectric heating adhesive sheet according to the exemplary embodiment is preferably 5 µm or more, more preferably 10 µm or more, still more preferably 30 µm or more, and still further more preferably 50 µm or more.

The high-frequency dielectric heating adhesive sheet having a thickness of 5 µm or more is likely to conform to irregularities of the adherend in bonding thereto, readily exhibiting the bonding strength.

When the high-frequency dielectric heating adhesive sheet has a multilayer configuration provided by a plurality of layers, the thickness of the adhesive layer is preferably 5 µm or more, more preferably 10 µm or more, still more preferably 30 µm or more, and still further more preferably 50 µm or more.

**In** the high-frequency dielectric heating adhesive sheet having a multilayer configuration, the adhesive layer having a thickness of 5 µm or more is likely to conform to irregularities of the adherend in bonding thereto, readily exhibiting the bonding strength.

The upper limit of the thickness of the high-frequency dielectric heating adhesive sheet is not particularly limited. Since a weight of the entire joined body obtained by bonding the high-frequency dielectric heating adhesive sheet to the adherend increases with an increase in thickness of the high-frequency dielectric heating adhesive sheet, the thickness of the high-frequency dielectric heating adhesive sheet is preferably in a range causing no problem during actual use. In consideration of practicality and formability of the high-frequency dielectric heating adhesive sheet, the thickness of the high-frequency dielectric heating adhesive sheet is preferably 2,000 µm or less, more preferably 1,000 µm or less, and still more preferably 600 µm or less.

The adhesive sheet as the adhesive agent for high-frequency dielectric heating is not only easy to handle but also improved in workability in bonding to the adherend as compared with a case where a liquid adhesive agent required to be applied is used.

Further, the thickness or the like of the adhesive sheet as the adhesive agent for high-frequency dielectric heating can be controlled as appropriate. The adhesive sheet is thus also usable in a roll-to-roll system and can be machined to have a desired area and shape by punching or the like in accordance with an area of bonding to the adherend and a shape of the adherend. Accordingly, the adhesive sheet as the adhesive agent for high-frequency dielectric heating is significantly advantageous also in terms of manufacturing process.

### Molding Body

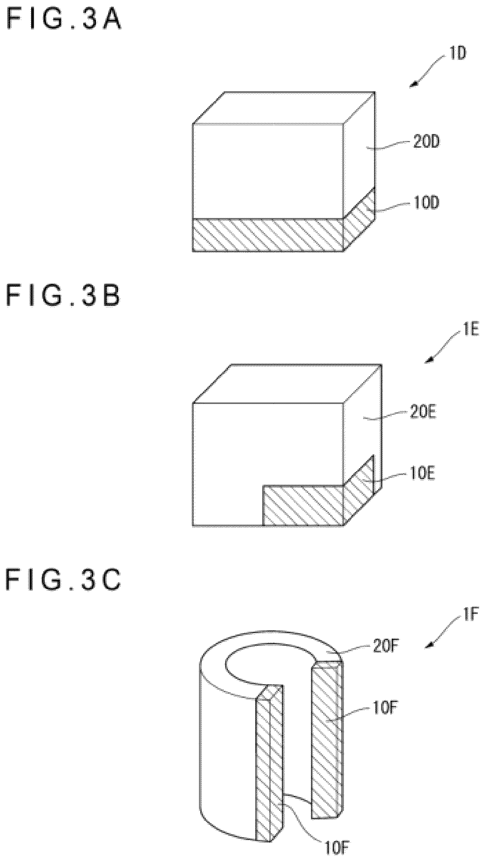

The adhesive agent for high-frequency dielectric heating according to the exemplary embodiment is also preferably a molding body. The form of the molding body according to the exemplary embodiment is not particularly limited. Figs. 3A to 3C are schematic perspective views of exemplary forms of the molding body according to the exemplary embodiment. The molding body according to the exemplary embodiment may be a molding body, formed from a single part or a plurality of parts, obtained by molding the adhesive agent for high-frequency dielectric heating according to the exemplary embodiment. For example, the molding body according to the exemplary embodiment may be a molding body including a first part formed from the adhesive agent for high-frequency dielectric heating according to the exemplary embodiment (first material) and a second part formed from a second material different from the first material of the first part.

A molding body 1D shown in Fig. 3A has a cubic shape. The molding body 1D has a first part 10D and a second part 20D that is larger in volume than the first part 10D.

A molding body 1E shown in Fig. 3B also has a cubic shape. The molding body 1D is different from the molding body 1E in the position of the first part in the cube and the ratio of the first part to the cube. In the molding body 1D, the first part 10D is in contact with an entire bottom surface of the second part 20D. In the molding body 1E, the first part 10E, which is positioned at a corner of the cube, is in contact with the second part 20E.

The molding body according to the exemplary embodiment may have a plurality of first parts. For example, a molding body 1F shown in Fig. 3C includes: a hollow second part 20F having a substantially cylindrical shape, part of which is cut along an axial direction; and two first parts 10F that are in contact with two end surfaces of the cut cylindrical second part 20F. The number of the first parts in the molding body is not limited to two, and may be three or more.

The form of the molding body according to the invention is not limited to the exemplary forms of the molding bodies 1D, 1E, and 1F. In the exemplary forms of the molding bodies 1D, 1E, and 1F, the first part is in direct contact with the second part. The invention is not limited to the form in which the first part is in direct contact with the second part. The first part may be in contact with the second part via another part (e.g., a third part).

**In** the molding body according to the exemplary embodiment, the second part is formed from the second material.

The second material is not particularly limited. Preferably, examples of the second material include at least one selected from the group consisting of an organic material, an inorganic material, and a natural material. Examples of the organic material include a thermoplastic resin and a thermosetting resin. Examples of the inorganic material include ceramic, glass, and metal. Examples of the natural material include wood, paper, leather, and stone.

**In** the molding body according to the exemplary embodiment, the first material is different from the second material. The wording of "the first material is different from the second material" means that the first material and the second material are not perfectly matched in their compositions. For example, when the first material contains a silane-modified thermoplastic resin (first thermoplastic resin (A1)), any other thermoplastic resin (second thermoplastic resin(A2)) different from the silane-modified thermoplastic resin, and zinc oxide, the second material may only contain a silane-modified thermoplastic resin. In this case, the second material does not contain any other thermoplastic resin and zinc oxide, and the first material and the second material are not perfectly matched in their compositions. That is, the first material is different from the second material.

### Method of Producing Adhesive Agent for High-Frequency Dielectric Heating

The adhesive agent for high-frequency dielectric heating according to the exemplary embodiment is producible, for example, by mixing the components described above.

The adhesive agent for high-frequency dielectric heating according to the exemplary embodiment in the form of an adhesive sheet is producible, for example, as follows. The production method, however, is not particularly limited. The high-frequency dielectric heating adhesive sheet formed of a single layer is producible by: premixing the above components; kneading and molding the premixed components using an extruder and a known kneader such as a heat roller through a known molding process such as extrusion molding, calender molding, injection molding, and casting

When the high-frequency dielectric heating adhesive sheet according to the exemplary embodiment has a multilayer configuration, the high-frequency dielectric heating adhesive sheet is producible, for example, by premixing the above components and performing a co-extrusion technique using a multilayer extruder. Alternatively, the sheet having a multilayer configuration is also producible by separately forming single-layered sheets (e.g., the first adhesive layer, the intermediate layer, and the second adhesive layer) constituting the high-frequency dielectric heating adhesive sheet according to the exemplary embodiment and layering the single-layered sheets through a lamination treatment. The lamination treatment for the single-layered sheets is performed, for example, by a heat laminator.

Further, the high-frequency dielectric heating adhesive sheet according to the exemplary embodiment is also producible by heat extrusion coating in which a base material is coated with a molten adhesive layer, hot melt coating, or wet coating in which a base material is coated with a coating liquid obtained by dissolving or dispersing an adhesive layer composition into a solvent.

The adhesive agent for high-frequency dielectric heating according to the exemplary embodiment in the form of a molding body is producible, for example, as follows. The production method, however, is not particularly limited.

When the molding body according to the exemplary embodiment is a molding body, which is formed of a single part, obtained by molding the adhesive agent for high-frequency dielectric heating (first material), single color molding is adoptable.

When the molding body according to the exemplary embodiment is a multicolor molding body including a plurality of parts as shown in Figs. 3A to 3C, multicolor molding using a plurality of materials (e.g., the first material and the second material) is adoptable. Further, a multicolor molding body is producible by fitting a molding body, which is formed of a single part, obtained by molding the adhesive agent for high-frequency dielectric heating (first material) into another molding body.

Further, a multicolor molding body is producible by insert molding using a first molding body formed from one of the first material and the second material and using the other of first material and the second material.

For example, the second material may be metal or ceramic. In this case, the second part made of metal or ceramic may be prepared to have a desired shape in advance. Then, insert molding may be performed using the second part and the first material to produce the molding body according to the exemplary embodiment.

Further, the molding body according to the exemplary embodiment is producible, for example, as follows: the first molding body is formed using one of the first material and the second material through injection molding or compression molding, and then insert molding is performed by using the first molding body and the other of the first material and the second material.

For example, the first molding body is formed using the second material through injection molding or compression molding. The first molding body corresponds to the second part. Then, the first material and the first molding body may be used in insert molding to produce the molding body. The part formed of the first material through insert molding corresponds to the first part.

### Usage of Adhesive Agent for High-Frequency Dielectric Heating

The adhesive agent for high-frequency dielectric heating according to the exemplary embodiment is usable for bonding with an adherend. Further, the adhesive agent for high-frequency dielectric heating according to the exemplary embodiment is also usable for bonding a plurality of adherends.

The material used for the adherend is not particularly limited. The material used for the adherend may be any one of an organic material and an inorganic material (including a metal material and the like), or may be a composite of the organic and inorganic materials.

Examples of the organic material as the material of the adherend include a plastic material and a rubber material. Examples of the plastic material include a polypropylene resin, a polyethylene resin, a polyurethane resin, an acrylonitrile-butadiene-styrene copolymer resin (ABS resin), a polycarbonate resin (PC resin), a polyamide resin (e.g., nylon 6 and nylon 66), a polyester resin (e.g., polyethylene terephthalate (PET resin) and polybutylene terephthalate resin (PBT resin)), a polyacetal resin (POM resin), a polymethyl methacrylate resin, and a polystyrene resin. Examples of the rubber material include styrene-butadiene rubber (SBR), ethylene propylene rubber (EPR), and silicone rubber. The adherend may be a foam of the organic material.

Examples of the inorganic material as the material of the adherend include a glass material, a cement material, a ceramic material, and a metal material. Further, the adherend may be a fiber reinforced resin (fiber reinforced plastics (FRP)) that is a composite material of fibers and the above plastic material. The plastic material in the fiber-reinforced resin is at least one resin selected from the group consisting of a polypropylene resin, a polyethylene resin, a polyurethane resin, an acrylonitrile-butadiene-styrene copolymer resin (ABS resin), a polycarbonate resin (PC resin), a polyamide resin (e.g., nylon 6 and nylon 66), a polyester resin (polyethylene terephthalate (PET resin) and a polybutylene terephthalate resin (PBT resin)), a polyacetal resin (POM resin), a polymethyl methacrylate resin, and a polystyrene resin. Examples of fiber in the fiber-reinforced resin include a glass fiber, a Kevlar fiber, and a carbon fiber.

In a case of bonding a plurality of adherends with the adhesive agent for high-frequency dielectric heating according to the exemplary embodiment, the material of the adherends are the same or different.

The adhesive agent for high-frequency dielectric heating according to the exemplary embodiment is suitably usable for bonding with an adherend made of glass. In a case of bonding a plurality of adherends, if at least one of the adherends is made of glass, the adhesive agent for high-frequency dielectric heating according to the exemplary embodiment can be firmly bonded to the adherend made of glass.

Although the adherend may have any shape, the adherend preferably has a surface to which the adhesive agent for high-frequency dielectric heating is bondable. A sheet-shaped or plate-shaped adherend is preferable. In a case of bonding a plurality of adherends, the shape and size thereof may be the same or different.

### Bonding Method

A bonding method according to the exemplary embodiment is a bonding method using the adhesive agent for high-frequency dielectric heating according to the exemplary embodiment.

An exemplary bonding method according to the exemplary embodiment is explained below, using an example where a first adherend is bonded with a second adherend using a high-frequency dielectric heating adhesive sheet formed of a single adhesive layer. The invention, however, is not limited to this example. The material of the second adherend is also not particularly limited.

An exemplary bonding method according to the exemplary embodiment includes a step P1 and a step P2 as below.

### Step P1

The step P1 is a step for holding the high-frequency dielectric heating adhesive sheet according to the exemplary embodiment between the first adherend and the second adherend. In the step P1, the first adherend made of glass is brought into contact with a first surface of the high-frequency dielectric heating adhesive sheet. Further, in the step P1, the second adherend is brought into contact with a second surface of the high-frequency dielectric heating adhesive sheet.

The high-frequency dielectric heating adhesive sheet may be held between the first adherend and the second adherend so that the first adherend is bondable to the second adherend. The high-frequency dielectric heating adhesive sheet may be held between the first adherend and the second adherend to partially overlap with the first and second adherends, the high-frequency dielectric heating adhesive sheets may be held at multiple portions between the first adherend and the second adherend, or the high-frequency dielectric heating adhesive sheet may be held between the first adherend and the second adherend to entirely overlap with the first and second adherends. In order to enhance the bonding strength between the first adherend and the second adherend, the high-frequency dielectric heating adhesive sheet is preferably held to entirely overlap with the adhesive surfaces of the first adherend and the second adherend. Further, as an exemplary arrangement in which the high-frequency dielectric heating adhesive sheet is held between the first adherend and the second adherend to partially overlap with the first and second adherends, the high-frequency dielectric heating adhesive sheet, which is frame-shaped, may be placed along outer circumferences of the adhesive surfaces of the first adherend and the second adherend to be held between the first adherend and the second adherend. Such a frame-shaped arrangement of the high-frequency dielectric heating adhesive sheet provides the bonding strength between the first adherend and the second adherend, and reduces the weight of the joined body as compared with an arrangement in which the high-frequency dielectric heating adhesive sheet is placed to entirely overlap with the adhesive surfaces of the adherends. Further, when the high-frequency dielectric heating adhesive sheet is held between the first adherend and the second adherend to partially overlap with the first and second adherends, the size of the high-frequency dielectric heating adhesive sheet in use is small. A time for the high-frequency dielectric heating treatment can thus be shortened as compared with an arrangement in which the high-frequency dielectric heating adhesive sheet is placed to entirely overlap with the adhesive surfaces of the adherends.

### Step P2

The step P2 is a step of applying a high-frequency electric field in a range from 3 MHz to 300 MHz to the high-frequency dielectric heating adhesive sheet held between the first adherend and the second adherend in the step P1 to bond the first adherend and the second adherend via the high-frequency dielectric heating adhesive sheet.

For example, a high-frequency electric field can be applied to the high-frequency dielectric heating adhesive sheet using a dielectric heating adhesion device. Herein, a "dielectric heating device" is occasionally referred to as the "dielectric heating adhesion device" or "high-frequency dielectric heating device".

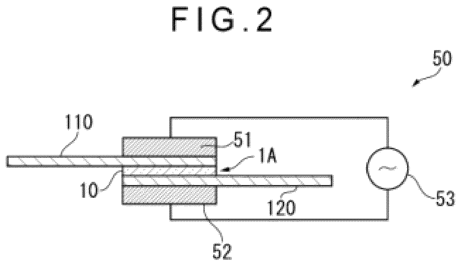

Fig. 2 is a schematic diagram illustrating a high-frequency dielectric heating treatment using the high-frequency dielectric heating adhesive sheet according to the exemplary embodiment and a dielectric heating device.

### Dielectric Heating Adhesion Device

Fig. 2 schematically shows a dielectric heating adhesion device 50.

The dielectric heating adhesion device 50 includes a first high-frequency electric field application electrode 51, a second high-frequency electric field application electrode 52, and a high-frequency power source 53.

The first high-frequency electric field application electrode 51 faces the second high-frequency electric field application electrode 52. The first high-frequency electric field application electrode 51 and the second high-frequency electric field application electrode 52 include a press mechanism. The press mechanism enables a first adherend 110, the high-frequency dielectric heating adhesive sheet 1A, and a second adherend 120 to be subjected to a pressure treatment between the first high-frequency electric field application electrode 51 and the second high-frequency electric field application electrode 52.

When the first high-frequency electric field application electrode 51 and the second high-frequency electric field application electrode 52 are in the form of a pair of plate electrodes parallel with each other, such an electrode arrangement is occasionally referred to as a parallel-plate type.

A high-frequency dielectric heating device in a parallel-plate type is also preferably used to apply a high-frequency electric field. The parallel-plate high-frequency dielectric heating device causes a high-frequency electric field to penetrate through the high-frequency dielectric heating adhesive sheet placed between the electrodes, making it possible to heat the whole of the high-frequency dielectric heating adhesive sheet and to bond the adherends with the high-frequency dielectric heating adhesive sheet in a short time.

The first high-frequency electric field application electrode 51 and the second high-frequency electric field application electrode 52 are each connected to the high-frequency power source 53 for applying a high-frequency electric field having, for example, a frequency of approximately 13.56 MHz, approximately 27.12 MHz, or approximately 40.68 MHz.

As shown in Fig. 2, the dielectric heating adhesion device 50 performs a dielectric heating treatment with the high-frequency dielectric heating adhesive sheet 1A being interposed between the first adherend 110 and the second adherend 120. Further, the dielectric heating adhesion device 50 performs, in addition to the dielectric heating treatment, a pressure treatment using the first high-frequency electric field application electrode 51 and the second high-frequency electric field application electrode 52 to bond the first adherend 110 and the second adherend 120. Note that the first adherend 110 and the second adherend 120 may be bonded to each other by pressing, for example, under only their own weights of the adhesive sheet and the adherends without performing the pressure treatment. Note that the first adherend 110 and the second adherend 120 may be bonded to each other without performing the pressure treatment.

When a high-frequency electric field is applied to between the first high-frequency electric field application electrode 51 and the second high-frequency electric field application electrode 52, the dielectric filler (not shown in the drawings), which is dispersed in adhesive agent components of the high-frequency dielectric heating adhesive sheet 1A, absorbs energy of high-frequency waves.

The dielectric filler functions as a heat generation source. The heat generation of the dielectric filler melts thermoplastic resin components, eventually making it possible to firmly bond the first adherend 110 and the second adherend 120 in a short time.

The first high-frequency electric field application electrode 51 and the second high-frequency electric field application electrode 52, which include the press mechanism, also function as a press device. In this arrangement, pressure is applied in compression directions by the first high-frequency electric field application electrode 51 and the second high-frequency electric field application electrode 52, and the high-frequency dielectric heating adhesive sheet 1A is melt by heating. The first adherend 110 and the second adherend 120 are thus more firmly bonded.

### High-Frequency Dielectric Heating Adhesive Conditions

High-frequency dielectric heating adhesive conditions can be modified as appropriate but the following conditions are preferable.

The output of the high-frequency electric field is preferably 10 W or more, more preferably 30 W or more, still more preferably 50 W or more, and still further more preferably 80 W or more.

The output of the high-frequency electric field is preferably 50,000 W or less, more preferably 20,000 W or less, still more preferably 15,000 W or less, still further more preferably 10,000 W or less, and yet still further more preferably 1,000 W or less.

An output of the high-frequency electric field of 10 W or more is not likely to cause a problem in which the temperature has difficulty in increasing in the dielectric heating treatment. Thus, a sufficient adhesion force is easily obtained.

An output of the high-frequency electric field output of 50,000 W or less is not likely to cause a problem in which temperature control by the dielectric heating treatment is difficult.

The application time of the high-frequency electric field is preferably one second or more.

The application time of the high-frequency electric field is preferably 300 seconds or less, more preferably 240 seconds or less, still more preferably 180 seconds or less, still further more preferably 120 seconds or less, and yet still further more preferably 100 seconds or less.

An application time of the high-frequency electric field of one second or more is not likely to cause a problem in which the temperature has difficulty in increasing in the dielectric heating treatment. Thus, a sufficient bonding force is easily obtained.

An application time of the high-frequency electric field of 300 seconds or less is not likely to cause problems of a decrease in production efficiency of the joined body obtained by bonding the first adherend and the second adherend, an increase in production costs, and heat deterioration of the adherends.

The frequency of the high-frequency electric field to be applied is preferably 1 kHz or more, more preferably 1 MHz or more, still more preferably 5 MHz or more, and still further more preferably 10 MHz or more.

The frequency of the high-frequency electric field to be applied is preferably 300 MHz or less, more preferably 100 MHz or less, still more preferably 80 MHz or less, and still further more preferably 50 MHz or less. Specifically, an industrial frequency band of 13.56 MHz, 27.12 MHz, or 40.68 MHz, which is designated by the International Telecommunication Union, is also usable for the high-frequency dielectric heating bonding method (bonding method) of the exemplary embodiment.

### Effects of Exemplary Embodiment

The adhesive agent for high-frequency dielectric heating according to the exemplary embodiment is bondable, even with low consumption energy, to glass with high bonding strength. The adhesive agent for high-frequency dielectric heating according to the exemplary embodiment, of which adhesion force is not likely to decrease with time, is excellent in long-term storage stability.

The adhesive agent for high-frequency dielectric heating according to the exemplary embodiment is excellent in water resistance and moisture resistance as compared with a typical sticky agent.

The adhesive agent for high-frequency dielectric heating according to the exemplary embodiment, which is heated through application of a high-frequency electric field, is locally heated. Thus, the adhesive agent for high-frequency dielectric heating according to the exemplary embodiment is not likely to have a problem in which the entire adherend melts at the time of bonding.

**In** the bonding method using the adhesive agent for high-frequency dielectric heating according to the exemplary embodiment, only a predetermined portion can be locally heated by a dielectric heating adhesion device from the outside. Thus, even when the adherend is in the form of a large-sized and complicated three-dimensional structure, a thickened and complicated three-dimensional structure, or the like, and in addition, high dimensional accuracy is required, the bonding method using the adhesive agent for high-frequency dielectric heating according to the exemplary embodiment is beneficial.

### Modifications of Exemplary Embodiment

The invention is not limited to the above exemplary embodiment. The invention can include modifications, improvements, and the like as long as they are compatible with the object of the invention.

The high-frequency dielectric heating adhesive sheet may have a sticky portion. The sticky portion inhibits an offset in position when the high-frequency dielectric heating adhesive sheet is held between adherends, allowing the high-frequency dielectric heating adhesive sheet to be placed at an accurate position. The sticky portion may be provided in one surface or both surfaces of the high-frequency dielectric heating adhesive sheet. Further, the sticky portion may be provided at part(s) of the surface(s) of the high-frequency dielectric heating adhesive sheet. The high-frequency dielectric heating adhesive sheet without the sticky portion can also firmly bond the first adherend and the second adherend.

The high-frequency dielectric heating treatment may be performed by a lattice-electrode high-frequency dielectric heating device without being limited to the dielectric heating adhesion device including the opposed electrodes described in the above exemplary embodiment. The lattice-electrode high-frequency dielectric heating device includes a lattice electrode in which electrodes having a first polarity and electrodes having a second polarity are alternatively arranged at regular intervals in the same surface, the first polarity being opposite to the second polarity.

For example, when a joined body is produced by bonding the first adherend and the second adherend with ends of the first and second adherends overlapping with each other, a high-frequency electric field is applied by the lattice-electrode high-frequency dielectric heating device placed on a side close to the first adherend or a side close to the second adherend.

**In** bonding the first adherend and the second adherend using the lattice-electrode high-frequency dielectric heating device, a high-frequency electric field may be applied at the same time by a first lattice-electrode disposed at the side close to the first adherend and a second lattice-electrode disposed at the side close to the second adherend with the first adherend, the high-frequency dielectric heating adhesive sheet, and the second adherend being interposed between the first lattice-electrode and the second lattice-electrode.

**In** bonding the first adherend and the second adherend using the lattice-electrode high-frequency dielectric heating device, a high-frequency electric field may be applied with the lattice electrode disposed on one surface side of the first adherend and the second adherend, and then a high-frequency electric field may be applied with the lattice electrode disposed on the other surface side of the first adherend and the second adherend.

Also preferably, the lattice-electrode high-frequency dielectric heating device is used to apply a high-frequency electric field. The use of the lattice-electrode high-frequency dielectric heating device allows adherends to bond to each other without being affected by the thickness of the first adherend and the second adherend through dielectric heating from a front-layer side of the first adherend and the second adherend (e.g. from an adherend side less distant to the adhesive agent for high-frequency dielectric heating). Further, the use of the lattice-electrode high-frequency dielectric heating device reduces energy required for producing the joined body.

It should be noted that an example using the dielectric heating adhesion device provided with opposed electrodes is exemplary shown in the diagram for the purpose of simplification.

### Examples

The invention will be described below in further detail with reference to Examples. The invention is by no means limited to these Examples.

### Preparation of Adhesive Agent for High-Frequency Dielectric Heating (Examples 1 to 5 and Comparatives 1 and 2)

The materials shown in Table 1 were premixed. The premixed material was supplied into a hopper of a 30-mm-diameter twin-screw extruder. Then, the premixed material was melted and kneaded at a cylinder setting temperature in a range from 180 degrees C to 200 degrees C and a die temperature of 200 degrees C. The material subjected to the melt kneading was cooled, followed by cut into granular pellets. Subsequently, the resultant granular pellets were loaded into a hopper of a single screw extruder provided with a T-die. Then, a film-shaped melted and kneaded substance was extruded from the T-die (cylinder temperature: 200 degrees C, die temperature: 200 degrees C) and was cooled by a cooling roll to produce a sheet-shaped adhesive agent for high-frequency dielectric heating having a thickness of 400 µm (high-frequency dielectric heating adhesive sheet) for each of Examples 1 to 5 and Comparatives 1 and 2.

Details of the thermoplastic resin and filler shown in Table 1 are as follows:
▪ Silane-Modified PP: silane-modified polypropylene, product name "Linkron PM700N" produced by Mitsubishi Chemical Corporation
▪ Silane-Modified PE: silane-modified polyethylene, product name "Linkron SS732N" produced by Mitsubishi Chemical Corporation
▪ m-PP: maleic anhydride-modified polypropylene, product name "Modic P565" produced by Mitsubishi Chemical Corporation
▪ PP: polypropylene, product name "Prime Polypro F-744NP" produced by Prime Polymer Co., Ltd.
▪ m-PE: maleic anhydride-modified polyethylene, product name "Modic M545" produced by Mitsubishi Chemical Corporation
▪ Zinc oxide (ZnO): zinc oxide having a volume average particle diameter of 11 µm, product name "LP-ZINC11" produced by SAKAI CHEMICAL INDUSTRY CO., LTD.

### MFR: Melt Flow Rate

The MFR at 190 degrees C of the thermoplastic resin was measured by a drop flow tester (model No. "CFT-100D" produced by Shimadzu Corporation) in accordance with JIS K 7210-1:2014.

In a case of using a mixture of a plurality of thermoplastic resins, the resins were kneaded with twin screws at each ratio shown in Table 1, preparing a mixed resin pellet. The MFR of the mixed resin pellet was measured as above.

### Volume Average Particle Diameter of Dielectric Filler

The particle size distribution of the dielectric filler was measured by a laser diffraction/scattering method. The volume average particle diameter was calculated from a result of the measurement of particle size distribution in accordance with JIS Z 8819-2: 2001. The volume average particle diameter of zinc oxide (ZnO) calculated was 11 µm.

### Evaluation of High-Frequency Dielectric Heating Adhesive Sheet

Each high-frequency dielectric heating adhesive sheet was evaluated as follows. Table 1 shows evaluation results.

### Adhesion Force (Tensile Shear Strength)

Adhesion force (tensile shear strength) was evaluated as an index for the evaluation of high-frequency adhesion performance.

The prepared high-frequency dielectric heating adhesive sheet was cut into a size of 25 mm x 12.5 mm. The cut high-frequency dielectric heating adhesive sheet was disposed between soda-lime glass (25 mm×100 mm×3 mm (thickness)) as a pair of adherends (first adherend and second adherend) such that the position of the adhesive sheet matched the position of the overlapping portion of the adherends. After the arrangement, the adherends and the high-frequency dielectric heating adhesive sheet were fixed between electrodes of a high-frequency dielectric heating device (product name "YRP-400T-A" produced by Yamamoto Vinita Co., Ltd.). The electrodes of the high-frequency dielectric heating device each had an area of 800 mm² (= 40mm × 20mm), and the electrodes were arranged to cover the overlapping portion of the adherends (soda-lime glass). A high-frequency electric field was applied under high-frequency wave application conditions below with the adherends and the high-frequency dielectric heating adhesive sheet being fixed, bonding the high-frequency dielectric heating adhesive sheet and the adherends. Each test piece for adhesion force evaluation was thus prepared.

In addition, the prepared high-frequency dielectric heating adhesive sheet was stored for a long time under hot and humid conditions (stored for a week at 50 degrees C and 95%RH), preparing each test piece for adhesion force evaluation as above.

### High-Frequency Wave Application Conditions

Frequency: 40.68 MHz
Output: 150 W
Application Time: 20 seconds
Pressing Pressure: 0.5 MPa

Pressing pressure at the time of high-frequency wave application was a pressure applied to a joint of the first adherend and the second adherend.

Each test piece prepared using the high-frequency dielectric heating adhesive sheet before being stored for a long time under hot and humid conditions was used as a test piece before an accelerating test, and each test piece prepared using the high-frequency dielectric heating adhesive sheet after being stored for a long time was used as a test piece after the accelerating test. Each test piece was subjected to measurement of a tensile shear strength (unit: MPa) as the adhesion force. The tensile shear strength was measured using a universal tensile tester (product name "INSTRON 5581" produced by Instron Corporation). The tensile shear strength was measured at a tension rate of 10 mm/min. Note that ">4.0" in Table 1 means that the tensile shear strength exceeded 4.0 MPa. The tensile shear strength was measured in accordance with JIS K 6850: 1999.

**Table 1**

| | Composition and Characteristics of High-Frequency Dielectric Heating Adhesive Sheet | | | | | | | | | | Evaluation | |
|---|---|---|---|---|---|---|---|---|---|---|---|---|
| | Thermoplastic Resin (A) | | | | | | | | Dielectric Filler (B) | | Tensile Shear Test | |
| | First Thermoplastic Resin(A1) | | | Second Thermoplastic Resin(A2) | | | MFR @190°C [g/10min] | Content Ratio [vol%] | Type | Content Ratio [vol%] | Before Accelerating Test | After Accelerating Test |
| | Type | Product Name | Content Ratio in Resin [vol%] | Type | Product Name | Content Ratio in Resin [vol%] | | | | | Tensile Shear Strength [MPa] | Tensile Shear Strength [MPa] |
| Ex. 1 | Silane-Modified PP | Linkron PM700N | 50 | m-PP | Modic P565 | 50 | 4 | 80 | Zinc Oxide | 20 | >4.0 | >4.0 |
| Ex. 2 | Silane-Modified PP | Linkron PM700N | 50 | PP | Prime Polypro F-744NP | 50 | 9 | 80 | Zinc Oxide | 20 | 1.7 | 1.8 |
| Ex. 3 | Silane-Modified PP | Linkron PM700N | 30 | m-PP | Modic P565 | 70 | 6 | 80 | Zinc Oxide | 20 | 1.8 | 1.7 |
| Ex. 4 | Silane-Modified PE | Linkron SS732N | 50 | m-PE | Modic M545 | 50 | 10 | 80 | Zinc Oxide | 20 | >4.0 | >4.0 |
| Ex. 5 | Silane-Modified PP | Linkron PM700N | 20 | m-PP | Modic P565 | 80 | 6 | 80 | Zinc Oxide | 20 | 1.1 | 1.2 |
| Comp. 1 | Silane-Modified PP | Linkron PM700N | 100 | - | - | - | 15 | 80 | Zinc Oxide | 20 | >4.0 | 0 |
| Comp. 2 | - | - | - | m-PE | Modic M545 | 100 | 6 | 80 | Zinc Oxide | 20 | 0 | - |

The high-frequency dielectric heating adhesive sheet in each of Examples 1 to 5 contained, as the thermoplastic resin, the silane-modified thermoplastic resin and the thermoplastic resin that was not silane-modified. Thus, adherends made of glass were bonded with high bonding strength even with small consumption energy, the tensile shear strength before tha accelerating test was high, and the tensile shear strength after the accelerating test was equivalent to or greater than that before the accelerating test. That is, in the high-frequency dielectric heating adhesive sheet in each of Examples 1 to 5, the adhesion force did not decrease with time and long-term storage stability was excellent.

The high-frequency dielectric heating adhesive sheet in Comparative 1 contained the silane-modified thermoplastic resin as the thermoplastic resin. Thus, the tensile shear strength before the accelerating test was high. The high-frequency dielectric heating adhesive sheet in Comparative 1, however, contained no thermoplastic resin that was not silane-modified. Thus, the tensile shear strength after the accelerating test was greatly reduced. That is, in the high-frequency dielectric heating adhesive sheet in Comparative 1, the adhesion force was likely to decrease with time and long-term storage stability was low.

The high-frequency dielectric heating adhesive sheet in Comparative 2 containing no silane-modified thermoplastic resin as the thermoplastic resin was not bonded to glass.

### EXPLANATION OF CODES

10···adhesive layer (first adhesive layer), 10D···first part, 10E···first part, 10F ···first part, 11···first surface, 12···second surface, 110···first adherend, 120··· second adherend, 1A···high-frequency dielectric heating adhesive sheet, 1B···high-frequency dielectric heating adhesive sheet, 1C...high-frequency dielectric heating adhesive sheet, 1D... molding body, 1E... molding body, 1F... molding body, 20... adhesive layer (second adhesive layer), 20D... second part, 20E... second part, 20F... second part, 21... second surface, 30... base material, 40... intermediate layer, 50...dielectric heating adhesion device, 51...first high-frequency electric field application electrode, 52... second high-frequency electric field application electrode, 53... high-frequency power source.

## Claims

1. An adhesive agent for high-frequency dielectric heating, at least comprising:
a thermoplastic resin (A) and a dielectric material that generates heat upon application of a high-frequency electric field having a frequency range from 3 MHz to 300 MHz, wherein
the thermoplastic resin (A) at least comprises a first thermoplastic resin (A1) and a second thermoplastic resin (A2),
the first thermoplastic resin (A1) is a silane-modified thermoplastic resin,
the second thermoplastic resin (A2) is a thermoplastic resin that is not silane-modified, and
the second thermoplastic resin (A2) comprises a polar site.

2. The adhesive agent for high-frequency dielectric heating according to claim 1, wherein the first thermoplastic resin (A1) is a silane-modified polyolefin resin.

3. The adhesive agent for high-frequency dielectric heating according to claim 1 or 2, wherein the second thermoplastic resin (A2) is a polyolefin resin that is not silane-modified.

4. The adhesive agent for high-frequency dielectric heating according to any one of claims 1 to 3, wherein the polar site of the second thermoplastic resin (A2) is an acid site.

5. The adhesive agent for high-frequency dielectric heating according to claim 4, wherein the acid site of the second thermoplastic resin (A2) is an acid anhydride structure.

6. The adhesive agent for high-frequency dielectric heating according to any one of claims 1 to 5, wherein a main composition of the first thermoplastic resin (A1) is ethylene or propylene.

7. The adhesive agent for high-frequency dielectric heating according to any one of claims 1 to 6, wherein a main composition of the second thermoplastic resin (A2) is ethylene or propylene.

8. The adhesive agent for high-frequency dielectric heating according to any one of claims 1 to 7, wherein the main composition of the first thermoplastic resin (A1) is identical to the main composition of the second thermoplastic resin (A2).

9. The adhesive agent for high-frequency dielectric heating according to any one of claims 1 to 8, wherein a melt flow rate at 190 degrees C of the thermoplastic resin (A) is in a range from 2 g/10 min to 50 g/10 min.

10. The adhesive agent for high-frequency dielectric heating according to any one of claims 1 to 9, wherein a volume content ratio of the dielectric material in the adhesive agent for high-frequency dielectric heating is in a range from 5 vol% to 50 vol%.

11. The adhesive agent for high-frequency dielectric heating according to any one of claims 1 to 10, wherein the dielectric material is a dielectric filler (B).

12. The adhesive agent for high-frequency dielectric heating according to claim 11, wherein the dielectric filler (B) comprises at least one selected from the group consisting of zinc oxide, silicon carbide, barium titanate, and titanium oxide.

13. The adhesive agent for high-frequency dielectric heating according to claim 11 or 12, wherein a volume average particle diameter of the dielectric filler (B) is in a range from 1 µm to 30 µm, and
the volume average particle diameter is a volume average particle diameter obtained by measuring a particle size distribution of the dielectric filler (B) by a laser diffraction/scattering method and performing calculation from a result of the particle size distribution measurement in accordance with JIS Z 8819-2: 2001.

14. The adhesive agent for high-frequency dielectric heating according to any one of claims 1 to 13 in a form of an adhesive sheet.

## Patentansprüche

1. Ein Klebstoff für die dielektrische Hochfrequenzerwärmung, der mindestens umfasst:
ein thermoplastisches Harz (A) und ein dielektrisches Material, das bei Anlegen eines hochfrequenten elektrischen Feldes mit einem Frequenzbereich von 3 MHz bis 300 MHz Wärme erzeugt, wobei
das thermoplastische Harz (A) mindestens ein erstes thermoplastisches Harz (A1) und ein zweites thermoplastisches Harz (A2) umfasst,
das erste thermoplastische Harz (A1) ein silanmodifiziertes thermoplastisches Harz ist,
das zweite thermoplastische Harz (A2) ein thermoplastisches Harz ist, das nicht silanmodifiziert ist, und
das zweite thermoplastische Harz (A2) eine polare Stelle umfasst.

2. Klebstoff für die dielektrische Hochfrequenzerwärmung nach Anspruch 1, wobei das erste thermoplastische Harz (A1) ein silanmodifiziertes Polyolefinharz ist.

3. Klebstoff für die dielektrische Hochfrequenzerwärmung nach Anspruch 1 oder 2, wobei das zweite thermoplastische Harz (A2) ein nicht silanmodifiziertes Polyolefinharz ist.

4. Klebstoff für die dielektrische Hochfrequenzerwärmung nach einem der Ansprüche 1 bis 3, wobei die polare Stelle des zweiten thermoplastischen Harzes (A2) eine Säurestelle ist.

5. Klebstoff für die dielektrische Hochfrequenzerwärmung nach Anspruch 4, wobei die Säurestelle des zweiten thermoplastischen Harzes (A2) eine Säureanhydridstruktur ist.

6. Klebstoff für die hochfrequente dielektrische Erwärmung gemäß einem der Ansprüche 1 bis 5, wobei der Hauptbestandteil des ersten thermoplastischen Harzes (A1) Ethylen oder Propylen ist.

7. Klebstoff für die dielektrische Hochfrequenzerwärmung nach einem belieb en der Ansprüche 1 bis 6, wobei der Hauptbestandteil des zweiten thermoplastischen Harzes (A2) Ethylen oder Propylen ist.

8. Klebstoff für die hochfrequente dielektrische Erwärmung gemäß einem der Ansprüche 1 bis 7, wobei der Hauptbestandteil des ersten thermoplastischen Harzes (A1) mit dem Hauptbestandteil des zweiten thermoplastischen Harzes (A2) identisch ist.

9. Klebstoff für die dielektrische Hochfrequenzerwärmung nach einem der Ansprüche 1 bis 8, wobei die Schmelzflussrate bei 190 °C des thermoplastischen Harzes (A) in einem Bereich von 2 g/10 min bis 50 g/10 min liegt.

10. Klebstoff für die hochfrequente dielektrische Erwärmung nach einem der Ansprüche 1 bis 9, wobei das Volumenanteilsverhältnis des dielektrischen Materials in dem Klebstoff für die hochfrequente dielektrische Erwärmung in einem Bereich von 5 Vol.-% bis 50 Vol.-% liegt.

11. Klebstoff für die hochfrequente dielektrische Erwärmung nach einem der Ansprüche 1 bis 10, wobei das dielektrische Material ein dielektrischer Füllstoff (B) ist.

12. Klebstoff für die hochfrequente dielektrische Erwärmung nach Anspruch 11, wobei der dielektrische Füllstoff (B) mindestens eine Verbindung umfasst, die aus der Gruppe ausgewählt ist, die aus Zinkoxid, Siliziumkarbid, Bariumtitanat und Titanoxid besteht.

13. Klebstoff für die hochfrequente dielektrische Erwärmung nach Anspruch 11 oder 12, wobei der volumengemittelte Partikeldurchmesser des dielektrischen Füllstoffs (B) in einem Bereich von 1 µm bis 30 µm liegt und
der volumengemittelte Partikeldurchmesser ein volumengemittelter Partikeldurchmesser ist, der durch Messung einer Partikelgrößenverteilung des dielektrischen Füllstoffs (B) mittels eines Laserbeugungs-/Streuverfahrens und durch Berechnung aus einem Ergebnis der Partikelgrößenverteilungsmessung gemäß JIS Z 8819-2: 2001 ermittelt wird.

14. Klebstoff für die hochfrequente dielektrische Erwärmung gemäß einem der Ansprüche 1 bis 13 in Form einer Klebefolie.

## Revendications

1. Agent adhésif pour chauffage diélectrique à haute fréquence, comprenant au moins:
une résine thermoplastique (A) et un matériau diélectrique qui génère de la chaleur lors de l'application d'un champ électrique à haute fréquence dont la gamme de fréquences s'étend de 3 MHz à 300 MHz, dans lequel
la résine thermoplastique (A) comprend au moins une première résine thermoplastique (A1) et une deuxième résine thermoplastique (A2),
la première résine thermoplastique (A1) est une résine thermoplastique modifiée au silane,
la deuxième résine thermoplastique (A2) est une résine thermoplastique non modifiée par des silanes, et
la deuxième résine thermoplastique (A2) comporte un site polaire.

2. Agent adhésif pour chauffage diélectrique à haute fréquence selon la revendication 1, dans lequel la première résine thermoplastique (A1) est une résine polyoléfinique modifiée au silane.

3. Agent adhésif pour chauffage diélectrique à haute fréquence selon la revendication 1 ou 2, dans lequel la deuxième résine thermoplastique (A2) est une résine polyoléfinique non modifiée au silane.

4. Agent adhésif pour chauffage diélectrique à haute fréquence selon l'une quelconque des revendications 1 à 3, dans lequel le site polaire de la deuxième résine thermoplastique (A2) est un site acide.

5. Agent adhésif pour chauffage diélectrique à haute fréquence selon la revendication 4, dans lequel le site acide de la deuxième résine thermoplastique (A2) est une structure d'anhydride d'acide.

6. Agent adhésif pour chauffage diélectrique à haute fréquence selon l'une quelconque des revendications 1 à 5, dans lequel la composition principale de la première résine thermoplastique (A1) est l'éthylène ou le propylène.

7. Agent adhésif pour chauffage diélectrique à haute fréquence selon l' e l'une quelconque des revendications 1 à 6, dans lequel la composition principale de la deuxième résine thermoplastique (A2) est l'éthylène ou le propylène.

8. Agent adhésif pour chauffage diélectrique à haute fréquence selon l'une quelconque des revendications 1 à 7, dans lequel la composition principale de la première résine thermoplastique (A1) est identique à la composition principale de la deuxième résine thermoplastique (A2).

9. Agent adhésif pour chauffage diélectrique à haute fréquence selon l'une quelconque des revendications 1 à 8, dans lequel l'indice de fluidité à chaud de la résine thermoplastique (A) à 190 °C est compris dans une plage allant de 2 g/10 min à 50 g/10 min.

10. Agent adhésif pour chauffage diélectrique à haute fréquence selon l'une quelconque des revendications 1 à 9, dans lequel le rapport de teneur en volume du matériau diélectrique dans l'agent adhésif pour chauffage diélectrique à haute fréquence est compris dans une plage allant de 5 % en volume à 50 % en volume.

11. Agent adhésif pour chauffage diélectrique à haute fréquence selon l'une quelconque des revendications 1 à 10, dans lequel le matériau diélectrique est une charge diélectrique (B).

12. Agent adhésif pour chauffage diélectrique à haute fréquence selon la revendication 11, dans lequel la charge diélectrique (B) comprend au moins un élément choisi parmi le groupe constitué de l'oxyde de zinc, du carbure de silicium, du titanate de baryum et de l'oxyde de titane.

13. Agent adhésif pour chauffage diélectrique à haute fréquence selon la revendication 11 ou 12, dans lequel le diamètre moyen en volume des particules de la charge diélectrique (B) est compris entre 1 µm et 30 µm, et
le diamètre moyen en volume des particules est un diamètre moyen en volume obtenu en mesurant la distribution granulométrique de la charge diélectrique (B) par un procédé de diffraction/diffusion laser et en effectuant un calcul à partir du résultat de la mesure de la distribution granulométrique conformément à la norme JIS Z 8819-2: 2001.

14. Agent adhésif pour chauffage diélectrique à haute fréquence selon l'une quelconque de s des revendications 1 à 13, sous la forme d'une feuille adhésive.
